# EUROPEAN PATENT APPLICATION

(11) **EP 4 571 563 A1**
(43) Date of publication of application: **18.06.2025**
(21) Application number: 24213072.2
(22) Date of filing: 14.11.2024
(51) Int. Cl.: G06F 30/17, G06F 30/27, G06N 3/08, G06F 119/08, G06F 119/14

(54) **COMPONENT DESIGN USING NEURAL NETWORKS**

(30) Priority: 13.12.2023 GB 202319019
(71) Applicant: Rolls-Royce plc, London N1 9FX (GB)
(72) Inventor: Gregory, Jonathan, Derby, DE24 8BJ (GB); Babu, Shiva, Derby, DE24 8BJ (GB); Nunez, Marco, Derby, DE24 8BJ (GB)
(74) Representative: Rolls-Royce plc

(57) **Abstract**

A method for generating new designs for a component using an artificial neural network, comprising: supplying a dataset of component designs represented as voxels; supplying a dataset of performance values, each performance value associated with either a respective component design or a voxel of a component design; categorising, based on the associated performance values, the component designs into performance categories according to one or more performance parameters; creating a training dataset by combining the performance categories for each component design, the dataset of performance values and the dataset of component designs; training an artificial neural network using the training dataset to produce a trained neural network; using the trained neural network to generate a new component design based on specified performance criteria.

## Description

### FIELD

This disclosure relates to generation of component designs using neural networks.

### BACKGROUND

Geometry modelling plays a crucial role for the computational representation of a given system and to obtain predictions about its performance, behaviour, etc. through simulation. A range of numerical techniques can be also coupled to enable the execution of design space exploration studies for the identification of optimal designs based on a specified number of objectives and constraints. This is typically achieved through parametric geometry models with a set of predefined design parameters used to control the dimensions and shape of the model. Currently, BRep (Boundary Representation) is amongst the most common geometry modelling methods used in industry for engineering applications, relying on a mathematical representation of 3D shapes through a collection of basic geometry elements describing the boundaries of its volume. Nonetheless, a number of limitations are associated with such an approach, including in particular:
- The level of control in manipulating geometry (i.e. to what extent the design space can be explored, allowing for the assessment of designs radically different to each other and to an original baseline).
- The simulation time required for the assessment of a single design point, especially when it comes to Fine Element Analysis or Computational Fluid Dynamics simulations of complex systems.
- The difficulty in re-using existing data (i.e. leveraging of information obtained from previous simulations).
- The difficulty in addressing at run-time geometric and topological errors deriving from the geometry manipulation, leading to problems with accuracy, scaling, and meshing amongst others.

Alternative modelling techniques have been investigated with the aim of providing more freedom and flexibility to create and manipulate the geometry of a system. Whilst some of these have proven to successfully address specific limitations associated with BRep models, further work is required to use them for design purposes.

Neural networks utilise a plurality of connected nodes to map some input to an output. They are often used in a machine learning context, whereby they are trained to map some input training data to corresponding output data, typically in vector form. Optimisation is achieved by minimising the error between the training data and the output of the network. In some circumstances it is possible to reduce the error to zero. In "Estimation of Surface Stresses on Voxel Meshes using Neuronal Nets on FEA Results in 2D Plane Stress Models", Franz B. Jungreitmayr | 990-999 | doi: 10.14733/cadaps.2021.990-999, a process for calculating stresses based on neuronal nets is described for 2D plane stress problems.

Xu, QC., Mu, TJ. & Yang, YL. in "A survey of deep learning-based 3D shape generation." Comp. Visual Media 9, 407-442 (2023). https://doi.org/10.1007/s41095-022-0321-5 provide a review of deep-learning-based 3D shape generation, based on their underlying shape representation and the architecture of the shape generator.

### SUMMARY

The invention is directed towards methods, instructions, computer-readable media and apparatus for generation of component designs using neural networks.

In a first aspect, there is provided a method for generating new designs for a component using an artificial neural network, comprising:
obtaining a dataset of component designs represented as voxels;
obtaining a dataset of performance values, each performance value associated with either a respective component design or a voxel of a component design;
categorising, based on the associated performance values, the component designs into performance categories according to one or more performance parameters;
creating a training dataset by combining the performance categories for each component design, the dataset of performance values and the dataset of component designs;
training an artificial neural network using the training dataset to produce a trained neural network;
using the trained neural network to generate a new component design based on specified performance criteria.

In some embodiments, the method further comprises manufacturing a component using the new component design, wherein the new component design is represented as voxels, each voxel defining a volume of solid material or a space in the component.

In some embodiments, the dataset of component designs includes material properties for the component, the material properties including one or more properties selected from: a stiffness, a yield strength, a rupture strength, an elastic limit, a creep modulus, and a temperature dependency of any of these properties.

In some embodiments, the performance values include one or more of: a stress value associated with each voxel of the component design, a displacement of a component under load, a resonant frequency of a component.

In some embodiments, the performance categories include one or more of: an upper and a lower limit off maximum stress values associated with each voxel of the component design, a maximum displacement of a component under load, an operating temperature range of a component.

In some embodiments, the dataset of performance values further comprises material properties for the component, the material properties including one or more properties selected from: a stiffness, a yield strength, a rupture strength, an elastic limit, a creep modulus and a temperature dependency of any of these properties, and generating a new component design includes either inputting material properties as a performance category or outputting material properties as part of the new component design.

In some embodiments, the new component design is for a component of an engine, which has a predetermined required performance category when in use.

In some embodiments, generating a new component design includes generating performance values, each performance value associated with either the new component design or a voxel of the new component design.

In some embodiments, the method further comprises:
creating multiple new component designs;
displaying a representation of each new component design to a user including displaying the performance values; and
in response to a selection of a preferred new component design by the user, manufacturing a component using the preferred new component design.

In some embodiments, obtaining a dataset of component designs represented as voxels comprises converting a dataset of component designs represented in a preliminary 3D format, such as boundary representation or constructive solid geometry, into a 3D matrix format of voxels; and
obtaining a dataset of performance values, each performance value associated with either a respective component design or a voxel of a component design, comprises producing a dataset of performance values for the component design represented in a preliminary 3D format using simulation software.

In a second aspect, there are provided instructions executable by a computer which, when executed by the computer, cause the computer to perform the method for generating new designs for a component using an artificial neural network as recited above.

In a third aspect, there is provided a non-transitory computer-readable medium having the instructions of the second aspect encoded thereon.

In a fourth aspect, there is provided a non-transitory computer-readable medium storing a neural network produced by the method for generating new designs for a component using an artificial neural network as recited above.

In a fifth aspect, there is provided an apparatus for generating new designs for a component using an artificial neural network, the apparatus comprising:
a memory subsystem configured to store:
   component designs represented as voxels;
   performance values, each performance value associated with either a respective component design or a voxel of a component design; and
   a neural network;
a categoriser configured to categorise the component designs according to one or more performance parameters to create a training dataset of categorised component designs comprising performance categories for each component design;
a neural network processor configured to execute the method for generating new designs for a component using an artificial neural network as recited above to generate a new component design based on new input performance criteria.

### BRIEF DESCRIPTION OF THE DRAWINGS

Embodiments will now be described by way of example only with reference to the accompanying drawings, which are purely schematic and not to scale, and in which:
FIG. 1 shows a process for creating a trained neural network and the use thereof for generating component designs.
FIG. 2 shows apparatus for the process of FIG. 1.
FIG. 3 illustrates the generation of training data for the trained neural network for the process of FIG. 1.
FIG. 4 illustrates the performance categorisation of training data.
FIG. 5 is an example comparison of neural network output with FEA simulated data.
FIG. 6 is an example of an airfoil design used as training data.

### DETAILED DESCRIPTION

### FIG. 1

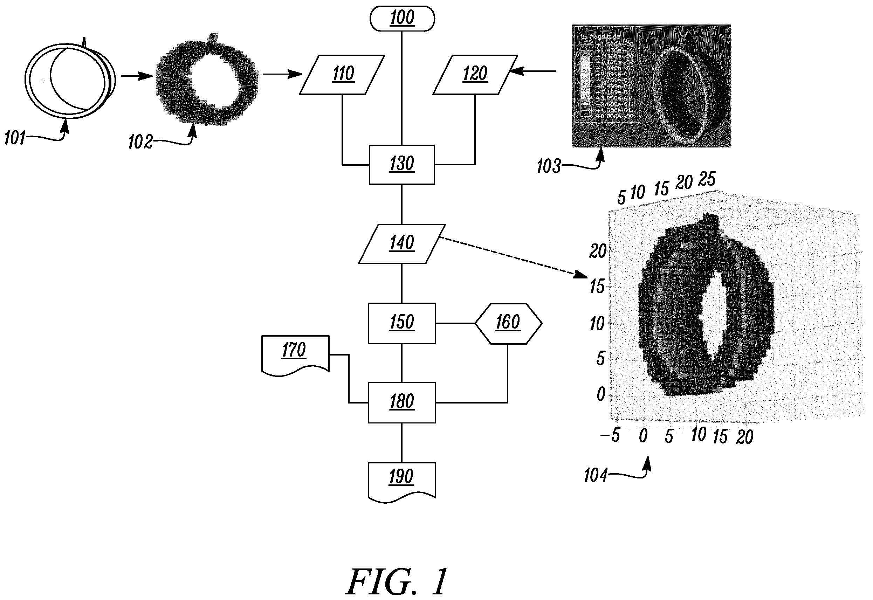

An overview of the process for creating a trained neural network and the use thereof is shown in FIG. 1.

The process starts at step 100.

A 3D geometry representing a component design 101 which is voxelated to provide a voxelated geometry representation 102 of the component design 101. Each voxel represents a single sample, or data point, on a regularly spaced, three-dimensional grid. The 3D geometry may be in any form that enables the structure of the component to be understood, such as a boundary representation of the component. The voxelation of the geometry associated with the component design is achieved by breaking it down into a set of voxels such as cubes or other tessellating shapes. The length and width and depth of the design are fixed to a number of units, which for simplicity may result in each voxel being of unit length, width, and height. Dataset 110 is obtained from a plurality of voxelated geometry representations 102, each derived from a component design 101.

The component designs 101 are now stored as a collection of voxels, each voxel representing a finite volume portion of the component along with properties. The voxels may represent positions in an orthogonal x,y,z grid, or they may be arranged in other layouts. The relationship between adjacent voxels may be inferred from the grid structure or may be explicitly stored in the dataset. The voxels may have multiple properties associated with each voxel or they may all be treated as having homogenous properties. For example, the voxels might be arranged in an orthogonal grid with each position either representing the presence or absence of a homogenous material, e.g. steel. Alternatively, each voxel may be associated with material properties, such as a type of material or the material properties for the component, such as stiffness, yield strength, rupture strength, elastic limit, creep modulus, and temperature dependency of any of these properties.

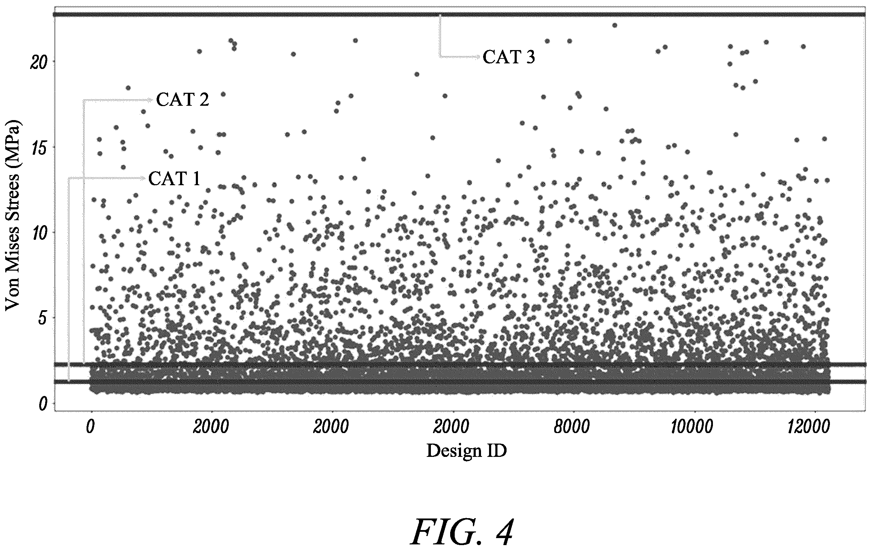

Next, performance values 103 for the component designs 101 are provided as dataset 120. Each performance value is associated with either a respective component design or a voxel of a component design. The performance values may be obtained from a simulation process, such as finite element analysis, or from measurements taken of the component. For example, performance values may be 3D fields (e.g., stress, temperature, displacements, velocities, energy, strains, etc.). Scalar values may be provided (e.g. resonance frequency, cost, weight, density, etc.). The performance values are associated with particular use conditions and material properties for the component. The performance values are processed to obtain a performance category for the respective component designs, such as maximum stress, maximum displacement etc, calculated for the component design as a whole, for example by finding the maximum value for each voxel. A performance category may be grouped to represent a range of performance values for a group of component designs as shown below in FIG. 4. Alternatively, performance values could be obtained from measurement of prototype components. Stress patterns for example can be measured optically using polarised light and transparent models and processed to produce performance values, along with measurements of loads and displacements.

At step 130, datasets 110 and 120 are combined to provide a training dataset 140, comprising voxelated geometry, performance values for each voxel and/or component design and a performance category for each component. The training dataset 140 contains sub-datasets representing multiple component designs for training along with their performance values and categories, as illustrated by 104.

The training dataset 140 is provided to a training process 150 to produce a trained neural network 160. In this example, the training data 140 was generated as described above from a set of exemplar input component design geometries 101 and having performance values 103 associated therewith. As used herein, the term component design geometry refers to the shape or configuration of a component, however represented in terms of data structure. For example, the component may be stored as a boundary representation, a polygon mesh, as a signed distance field, as an implicit function or as a point cloud, or any other way of defining the shape or configuration of a component.

In an embodiment, the exemplar input component design geometries 101 are of the type typically used with conventional computational finite element analysis FEA codes and methods. The example shown is based on the geometry of a casing lug. Accompanying exemplar input component design geometries 101 are a set of pre-computed FEA simulations 103 corresponding to all or at least a subset of the exemplar input component geometries 101. In the present embodiment, the pre-computed FEA simulations 103 are pre-computed by performing a conventional FEA run on the subset of the input component geometries 101 using the corresponding boundary condition definitions associated therewith. Component design geometries may be taken to subsequent steps for meshing, application of boundary conditions, and submission to a solver. Results may be post-processed to extract the simulation data to be associated with each component design geometry. As an example, such data may include the maximum Von Mises stress value at each node, although alternative fields (e.g. temperature, displacements, etc.) could also be generated.

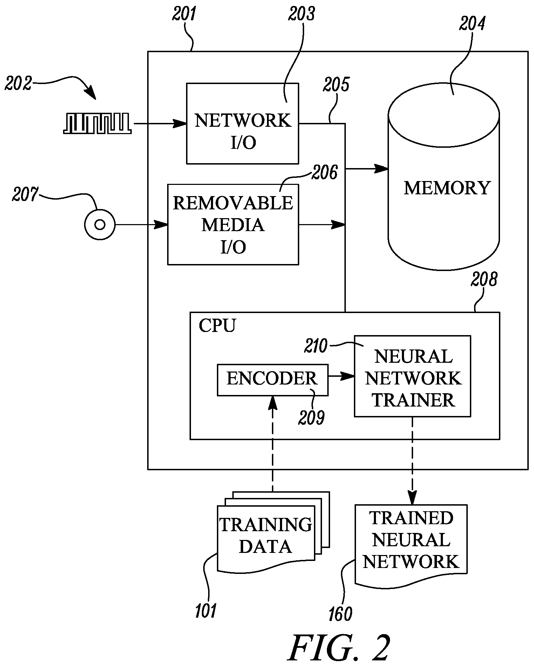

In operation, the training process 150 uses the training data 140 to produce the neural network 160 for use in the generation of component design geometries. This process will be described further with reference to FIG. 2.

Once the training process 150 is complete, the trained neural network 160 may be disseminated for use in a generation process 180, whereby one of the performance categories 170, having performance requirements and boundary conditions associated therewith, is processed to produce an output 190. The output 190 comprises one or more voxelated new component designs, along with predicted performance values for each voxel. A requested number of component designs can be created within one of the performance categories used for the labelling of the training dataset. The output dataset maybe further filtered and processed to select generated designs meeting other performance criteria. For example, the performance category might be maximum Von Mises Stress, and the output dataset may be filtered to select generated designs with a maximum weight, derived by integrating the weight of the component voxels.

It will be appreciated that conventional FEA processing to produce for example the set of pre-computed FEA simulations 103 is highly computationally intensive, with runs often taking hours or even days even on high performance computing clusters. By contrast, the generation process 180 has been shown to produce generated outputs 190 in around 1 second at greater than 95 percent accuracy, for example 97 percent, when compared to the FEA simulation of a new geometry.

### FIG. 2

Example apparatus for the training process 102 is shown in FIG. 2. In the present embodiment the apparatus is a workstation computer 201, but in alternative embodiments a server or even virtualised computer could be used.

In this embodiment, computer-readable training process instructions 202 may be received from a network location, possibly on the Internet, via a network interface 203. The instructions 202 are then transferred to memory 204 via an internal bus 205. Alternatively, the instructions may be transferred into memory via a removable media interface 206 configured to read the instructions from a non-transitory computer-readable medium such as a CD-ROM 207, or alternatively from Flash storage etc.

In the present embodiment, when the instructions 202 are invoked, processes are established on the central processing unit 208 for training a neural network and allocated a partition of memory. As used herein, memory refers to all tiers of memory in the computer 201, and thus includes high-speed cache in the CPU 208, along with random access memory and non-volatile storage. In the present embodiment, processing is performed on a CPU however it will be appreciated that in alternative embodiments individual processing routines may be performed on a graphics processing unit (GPU) to utilise the extreme level of parallelism in their architecture. It is further contemplated that alternative specialised hardware could be used to accelerate processing, for example use of dedicated neural network accelerator cards possibly using field-programmable gate array (FPGA) or application-specific integrated circuit (ASIC) hardware.

In the present embodiment two processes are spawned: an encoder 209 and a neural network trainer 210. It will be appreciated that the actual architecture of the processes may differ - there could be one monolithic process or more than two depending on compiler optimisations, for example. The encoder 209 is configured to receive exemplar input component geometries 101 (loaded into memory 204 via the network interface 203, for example) and to produce a set of voxels characterising the component geometry and additionally, for the pre-computed FEA or other simulations 103 (FIG. 1), the local computed performance value for a voxel.

The output of the encoder 209 is provided to the neural network trainer 210, which performs a first training process on a neural network to produce the trained neural network 160. The trained neural network 160 may be saved to memory 204, distributed via the network interface 203, or encoded on a computer-readable medium such as a CD-ROM or Flash storage etc. using the removable media interface 202.

In the training process, the network is trained by minimising the error between the output of the network given the input, and the pre-computed performance from simulations of the domain. In the present embodiment, the performance values are FEA stress analysis. In particular, they may comprise Von Mises stress to predict yielding of the component under load, and the requirement to observe boundary conditions.

### FIG. 3

As described above, one of the inputs to creating the training data is a dataset of component designs.

The component designs for training may be obtained using existing geometry and simulation datasets to train the models used in the design of novel product by leveraging on the knowledge from previous projects/work. Component geometry that was created with variation of shape parameters and then simulated to provide performance values can be used to create a training dataset for a particular class of component for example. In an embodiment, the training dataset will be derived from existing design datasets, with a variety of performance and topologies (for example, a turbine blade. based on different combinations of chord/thickness/twist angle/leading edge and trailing edge profiles, etc.).

To demonstrate the training and generation concept, a generic dataset of designs was created to provide a simplified example.

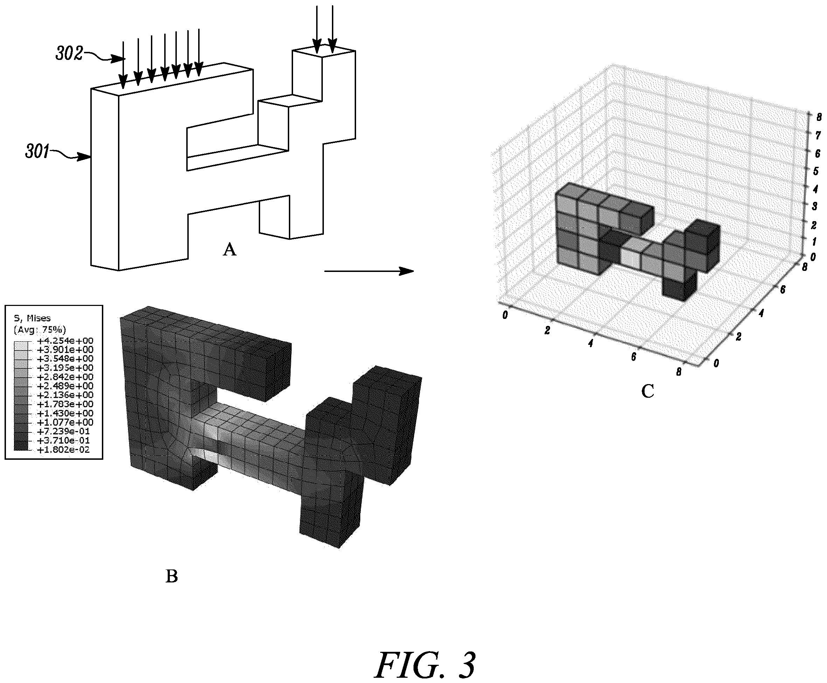

The demonstration designs shown as examples in FIG. 3 are semi random structures. The main constraint used in the creation process for these semi-random structures were the boundary conditions (i.e. where fixed constraints and the load are applied). Random removal of voxels was used in the generation of the demonstration case to ensure significantly different topologies of designs were included in the training dataset.

In FIG. 3, (A) represents a randomly generated component, a cantilever beam with boundary conditions of a constrained face 301 on the left, and a compression load 302 applied at the top. (B) represents the output of FEA stress analysis performed on the randomly generated component. (C) represents the voxelated dataset representing the component along with the performance values for each voxel.

Many such random examples were generated as a sample training set, each of which comprised a single solid shape. The generated shapes were then taken to subsequent steps for meshing, application of boundary conditions, and submission to a solver. Results were post-processed to extract the simulation data to be associated with each analysed design concept. For the present study such data was derived from the maximum Von Mises stress value at each node, although alternative fields (e.g. temperature, displacements, etc.) could be used.

Any performance values that are in the format of 3D fields (e.g., stress, temperature, displacements, velocities, energy, strains, etc.) could be used as training data. It is also possible to embed scalar or single values too (e.g. resonance frequency, cost, weight, density, etc.) in the performance values.

A definition of materials used for the component may be in the format of a categorical field (used to specify e.g. whether it's a steel or a softer material), without the need to refer/details the specific material properties. This field may provide material properties for the component, which may include stiffness, yield strength, rupture strength, elastic limit, creep modulus, and the temperature dependency of any of these properties.

### Design Categorisation for Training / FIG. 4

The technology used in this invention for the synthetic generation of novel design concepts together with a prediction of their performance is based on Conditional Generative Adversarial Networks (cGANs). These require a labelled training dataset to allow for a conditional generation of new images, namely belonging to a specified performance category. For the present example such label is given by the maximum Von Mises stress associated with each concept in the training dataset, as illustrated in **Error! Reference source not found.,** where randomly generated designs are plotted by design ID on the horizontal axis and maximum Von Mises stress in megapascals (MPa) on the vertical axis. It can be noted that this varies from 0.61329 to 22.118 MPa.

Three upper boundaries are shown, CAT1, CAT2, CAT3 for the labelling of the approx. 12,000 generated concepts in this training dataset. For this example, the following ranges were taken in order to ensure an equal distribution in each group: CAT1 (0.0 to 0.92) MPa, CAT2 (0.92 to 1.5) MPa, and (1.5 to 22) MPa for CAT3. These boundaries were chosen as an example to demonstrate the use of performance categories. Once the generated concepts have been categorised, these performance categories are used as labels in the training data. Once the neural network has been trained, it can be used to generate new component designs by supplying a desired performance category as an input, and the trained neural network will then generate designs that meet the desired performance category. An advantage of the invention is the ability to generate new designs together with their corresponding prediction of performance (i.e. 3D geometry and a prediction of performance at each of its constituting elements/voxels). It allows to generate a generic number of new designs meeting a specific design criterion, namely the requested category.

### FIG. 5

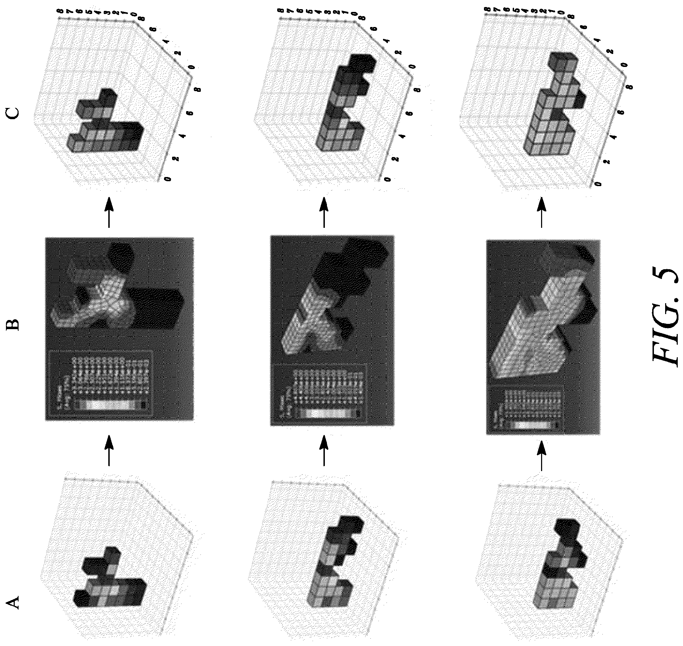

Illustrated in **FIG. 5** is the comparison showing strong qualitative correlation between FEA results in column B and the prediction bundled in the generated component designs in column A. It highlights the ability of this invention to predict the distribution of the maximum Von Mises stress value across the geometry of novel concepts, from which the location (voxel) and value of its global maximum can be easily identified. Column C shows the FEA output mapped to the voxels for comparison.

### FIG. 6

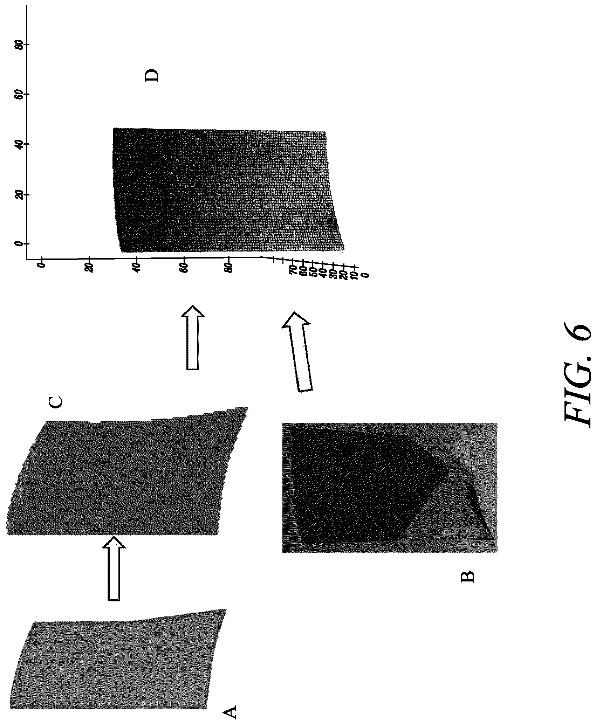

A cGAN may be trained using a specific type of component design, such as an airfoil, a housing, a rotor, each under specific operating conditions, and generate new designs of that type that meet desired performance categories. **FIG. 6** shows an example of an airfoil design being used as training data, (A) represents the conventional design and (B) is the output from a FEA analysis of the airfoil under load. Voxelated geometry (C) is generated from the conventional design and is combined with the FEA analysis to produce an element of training data (D).

The proposed methodology may offer a semi-instant and discretised preview/prediction of performance for generated design concepts considered based on a specified set of conditions/criteria. This could also include a preview of computational fluid CFD results, in a discretised manner where each voxel represents the maximum/average velocity in its corresponding space, in a similar way as the calculation of the maximum Von Mises stress in the space of each voxel is described in the application form. There is a balance in the resolution of such preview/prediction: the higher it is (i.e. the smaller is the size of voxels), and the closer the prediction is with a smoothed/continuous field (e.g. from typical CFDs), though at the same time the training time/cost of the model is higher.

Manufacturing a component can be carried out automatically from the generated designs. For example, additive layer manufacturing or 3D printing could generate a solid version of the voxelised design. Alternatively, the voxelised design could be smoothed to generate a conventional 3D model which could then be used to produce a component using computer-controlled machinery such as CNC machinery.

The design method disclosed herein could be used to generate multiple candidate designs, and a user may select one of the candidate designs based on further criteria. The selected candidate design may go through further review and modelling before manufacture by conventional means.

The final engineering judgment may be left to a human engineer, based on the outputs from the neural network. The described design tool in this way may be used in a few different ways, including:
- As a semi-instant alternative to traditional (long) simulations, obtaining a prediction on performance for a design defined by the user. This would be effectively the same as a human engineer using FEA analysis but in 'real-time' timescales.
- As a design space exploration tool for the identification of design concepts meeting a specified set of design criteria.
- As an interactive tool to either fine-tune a concept of interest or to understand the implications of required changes (e.g. facilitating the analysis of what-if scenarios based on the addition/removal of material, change of shape/topology).

## Claims

1. A method for generating new designs for a component using an artificial neural network, comprising:
obtaining a dataset of component designs represented as voxels;
obtaining a dataset of performance values, each performance value associated with either a respective component design or a voxel of a component design;
categorising, based on the associated performance values, the component designs into performance categories according to one or more performance parameters;
creating a training dataset by combining the performance categories for each component design, the dataset of performance values and the dataset of component designs;
training an artificial neural network using the training dataset to produce a trained neural network;
using the trained neural network to generate a new component design based on specified performance criteria.

2. The method of claim 1, further comprising manufacturing a component using the new component design,
wherein the new component design is represented as voxels, each voxel defining a volume of solid material or a space in the component.

3. The method of claims 1 or 2, wherein the dataset of component designs includes material properties for the component,
the material properties including one or more properties selected from: a stiffness, a yield strength, a rupture strength, an elastic limit, a creep modulus, and a temperature dependency of any of these properties.

4. The method of any previous claim, wherein the performance values include one or more of:
a stress value associated with each voxel of the component design;
a displacement of a component under load;
a resonant frequency of a component.

5. The method of any previous claim, wherein the performance categories include one or more of:
an upper and a lower limit of maximum stress values associated with each voxel of the component design;
a maximum displacement of a component under load;
an operating temperature range of a component.

6. The method of any previous claim, wherein the dataset of performance values further comprises material properties for the component, the material properties including one or more properties selected from:
a stiffness;
a yield strength;
a rupture strength;
an elastic limit;
a creep modulus; and
a temperature dependency of any of these properties, and generating a new component design includes either inputting material properties as a performance category or outputting material properties as part of the new component design.

7. The method of any previous claim, wherein the new component design is for a component of an engine which has a predetermined required performance category when in use.

8. The method of any previous claim, wherein generating a new component design includes generating performance values, each performance value associated with either the new component design or a voxel of the new component design.

9. The method of claim 8, further comprising:
creating multiple new component designs;
displaying a representation of each new component design to a user including displaying the performance values; and
in response to a selection of a preferred new component design by the user, manufacturing a component using the preferred new component design.

10. The method of any previous claim, wherein
obtaining a dataset of component designs represented as voxels comprises converting a dataset of component designs represented in a preliminary 3D format, such as boundary representation or constructive solid geometry, into a 3D matrix format of voxels; and
obtaining a dataset of performance values, each performance value associated with either a respective component design or a voxel of a component design, comprises producing a dataset of performance values for the component design represented in a preliminary 3D format using simulation software.

11. Instructions executable by a computer which, when executed by the computer, cause the computer to perform the method of any one of claims 1 to 10.

12. A non-transitory computer-readable medium having the instructions of claim 11 encoded thereon.

13. A non-transitory computer-readable medium storing a neural network produced by the method of any one of claims 1 to 10.

14. Apparatus for generating new designs for a component using an artificial neural network, the apparatus comprising:
a memory subsystem configured to store:
component designs represented as voxels;
performance values, each performance value associated with either a respective component design or a voxel of a component design; and
a neural network;
a categoriser configured to categorise the component designs according to one or more performance parameters to create a training dataset of categorised component designs comprising performance categories for each component design;
a neural network processor configured to execute the method of any one of claims 1 to 10 to generate a new component design based on new input performance criteria.
